(19) Europäisches Patentamt / European Patent Office / Office européen des brevets

(11) **EP 2 955 725 A1**

(12) **EUROPEAN PATENT APPLICATION**
published in accordance with Art. 153(4) EPC

(43) Date of publication:
**16.12.2015 Bulletin 2015/51**

(51) Int Cl.:
*H01B 7/02* (2006.01)    *H01F 5/06* (2006.01)
*H02K 3/32* (2006.01)

(21) Application number: **14749656.6**

(22) Date of filing: **04.02.2014**

(86) International application number:
**PCT/JP2014/052573**

(87) International publication number:
**WO 2014/123122 (14.08.2014 Gazette 2014/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.02.2013  JP 2013022741**

(71) Applicants:
• **Furukawa Electric Co., Ltd.**
 **Chiyoda-ku**
 **Tokyo 100-8322 (JP)**
• **Furukawa Magnet Wire Co., Ltd.**
 **Tokyo 100-0005 (JP)**

(72) Inventors:
• **OYA, Makoto**
 **Tokyo 100-8322 (JP)**
• **MUTO, Daisuke**
 **Tokyo 100-8322 (JP)**
• **TOMIZAWA, Keiichi**
 **Tokyo 100-0005 (JP)**

(74) Representative: **Forstmeyer, Dietmar et al**
**BOETERS & LIECK**
**Oberanger 32**
**80331 München (DE)**

(54) **INSULATED ELECTRIC WIRE AND MOTOR**

(57) An insulated wire, containing a conductor, an insulating layer that directly or indirectly coats the outer periphery of the conductor and includes a foaming thermosetting resin, and an outer non-foamed insulating layer that directly or indirectly coats the outer periphery of the insulating layer, wherein the insulating layer has a thickness deformation ratio of 15% or more and 50% or less upon applying a pressure of 1 MPa at 25°C, wherein the outer non-foamed insulating layer has pencil hardness of 4H or more, and wherein a ratio of thickness of the insulating layer to the outer non-foamed insulating layer is 20 : 80 to 80 : 20; and a motor, wherein the insulated wire is wound into a stator slot in a state in which pressure is applied in a direction for reducing the outer diameter of the insulated wire and a thickness of the insulating layer is reduced.

*Fig. 1*

EP 2 955 725 A1

**Description**

TECHNICAL FIELD

The present invention relates to an insulated wire and a motor.

BACKGROUND ART

Inverters have been installed in many types of electric equipment, as an efficient variable-speed control unit. Inverters are switched at a frequency of several kHz to tens of kHz, to cause a surge voltage at every pulse thereof. Inverter surge is a phenomenon in which reflection occurs at a breakpoint of impedance, for example, at a starting end, a termination end, or the like of a connected wire in the propagation system, and as a result, a voltage up to twice as high as the inverter output voltage is applied. In particular, an output pulse occurred due to a high-speed switching device, such as an IGBT, is high in steep voltage rise. Accordingly, even if a connection cable is short, the surge voltage is high, and further voltage decay due to the connection cable is low. As a result, a voltage almost twice as high as the inverter output voltage occurs.

As coils for electric equipment such as inverter-related equipment, for example, high-speed switching devices, inverter motors and transformers, insulated wires, which are enameled wires, are mainly used as magnet wires in the coils. Accordingly, as described above, since a voltage nearly twice as high as the inverter output voltage is applied in the inverter-related equipment, it has been required in the insulated wires to minimize partial discharge deterioration, which is attributable to inverter surge.

In general, partial discharge deterioration means a phenomenon in which the following deteriorations of the electric insulating material occur in a complicated manner: molecular chain breakage deterioration caused by collision with charged particles that have been generated by partial discharge (discharge at a portion in which fine void defect exists); sputtering deterioration; thermal fusion or thermal decomposition deterioration caused by local temperature rise; or chemical deterioration caused by ozone generated due to discharge, and the like. The electric insulating materials which actually have been deteriorated by partial discharge show reduction in the thickness.

In order to prevent deterioration of an insulated wire caused by such partial discharge, insulated wires having improved resistance to corona discharge by incorporating particles into an insulating film have been proposed. For example, an insulated wire incorporating metal oxide fine particles or silicon oxide fine particles into an insulating film (see Patent Literature 1), and an insulated wire incorporating silica into an insulating film (see Patent Literature 2) have been proposed. These insulated wires reduce erosive deterioration caused by corona discharge, by the insulating films containing particles. However, the insulated wires having insulating films containing these particles have problems that the effect is insufficient so that a partial discharge inception voltage is decreased and flexibility of the coated film is decreased.

There is also available a method of obtaining an insulated wire which does not cause partial discharge, that is, an insulated wire having a high voltage at which partial discharge occurs. In this regard, a method of making the thickness of the insulating layer of an insulated wire thicker, or using a resin having a low relative dielectric constant in the insulating layer can be considered.

However, when the thickness of the insulating layer is increased, the resultant insulated wire becomes thicker, and as a result, size enlargement of electric equipment is brought about. This goes against the demand in recent miniaturization of electric equipment represented by motors and transformers. For example, specifically, it is no exaggeration to say that the performance of a rotator, such as a motor, is determined by how many wires are held in a stator slot. As a result, it has been required in recent years to particularly increase the ratio (space factor) of the cross-section area of conductors to the cross-section area of the stator slot. Therefore, increasing the thickness of the insulating layer leads to a decrease in the space factor, and this is not desirable when the required performance is taken into consideration.

On the other hand, as a means for decreasing a substantial relative dielectric constant of the insulating layer, such a measure has been studied as forming the insulating layer from foam, and foamed wires containing a conductor and a foamed insulating layer have been widely used as communication wires. Conventionally, foamed wires obtained by, for example, foaming an olefin-based resin such as polyethylene or a fluorine resin have been well-known. Specific examples include foamed polyethylene insulated wires (see Patent Literature 3), foamed fluorine resin insulated wires (see Patent Literature 4), and the like.

CITATION LIST

PATENT LITERATURES

Patent Literature 1: Japanese Patent No. 3496636
Patent Literature 2: Japanese Patent No. 4584014
Patent Literature 3: Japanese Patent No. 3299552
Patent Literature 4: Japanese Patent No. 3276665

## SUMMARY OF INVENTION

### TECHNICAL PROBLEM

The insulated wire that is subjected to coil forming and used as a winding wire for a motor or the like is required, as mentioned above, to have difficulty in causing partial discharge and a damage during coil forming, and to contribute to miniaturization and improvement in efficiency of the motor or the like.

However, for example, the insulated wire including cells (air bubbles) as described in Patent Literature 3 is used in a communication application, and has been far from optimum as the insulated wire that is subjected to coil forming and used as the winding wire for the motor or the like. In particular, the insulated wire described in Patent Literature 3 is insufficient in abrasion resistance on the surface of an insulating layer, and therefore has had a problem of being easily scratched when the wire is used as the winding wire.

The present invention is contemplated for providing an insulated wire that is excellent in scratch resistance and can increase a conductor space factor of a motor or a transformer while a high partial discharge inception voltage is maintained.

Further, the present invention is contemplated for providing a small or highly efficient motor that uses the insulated wire having the above excellent performance and can selectively suppress partial discharge at the end portion of the insulated wire.

### SOLUTION TO PROBLEM

The present inventors found that, in an insulated wire having a foamed insulating layer and an outer non-foamed insulating layer, if all of a thickness deformation ratio of the foamed insulating layer, hardness of the outer non-foamed insulating layer and a thickness ratio of the foamed insulating layer to the outer non-foamed insulating layer are set up in a specific range, the foamed insulating layer and the outer non-foamed insulating layer conjointly contribute to an increase in a partial discharge inception voltage of the insulated wire, and also to miniaturization and improvement in efficiency of a motor coil, and thus completed the present invention.

The above-described problems can be solved by the following means.

(1) An insulated wire, comprising:

a conductor;
an insulating layer (sometimes referred to as a foamed insulating layer) that directly or indirectly coats the outer periphery of the conductor and includes a foaming thermosetting resin; and
an outer non-foamed insulating layer that directly or indirectly coats the outer periphery of the insulating layer,
wherein the insulating layer has a thickness deformation ratio of 15% or more and 50% or less upon applying a pressure of 1 MPa at 25°C,
wherein the outer non-foamed insulating layer has pencil hardness of 4H or more, and
wherein a ratio of a thickness of the insulating layer to a thickness of the outer non-foamed insulating layer is 20 : 80 to 80 : 20.

(2) The insulated wire described in the above item (1), wherein the thermosetting resin has a glass transition temperature of 150°C or higher.
(3) The insulated wire described in the above item (1) or (2), wherein the insulating layer includes closed cells.
(4) The insulated wire described in any one of the above items (1) to (3), wherein the insulating layer has a porosity of 10% or more.
(5) The insulated wire described in any one of the above items (1) to (4), used as a winding wire for a motor coil.
(6) A motor, comprising winding the insulated wire described in any one of the above items (1) to (5) into a stator slot in a state in which pressure is applied in a direction for reducing the outer diameter of the insulated wire and a thickness of the insulating layer is reduced.

In the present invention, the term "glass transition temperature" means the lowest glass transition temperature when there are plural glass transition temperatures.

Further, in the present invention, the expression "indirectly coat a conductor and the like" means coating the conductor and the like through another layer. The expression means, for example, that the foamed insulating layer coats the conductor through any other layer, and that the outer non-foamed insulating layer coats the foamed insulating layer through any other layer. Here, examples of the other layer include an inner non-foamed layer having no cells, an adhesion layer (adhesive layer) and the like each of which is other than the above-mentioned foamed insulating layer and the outer non-foamed insulating layer.

ADVANTAGEOUS EFFECTS OF INVENTION

The present invention can provide an insulated wire that contributes to miniaturization and improvement in efficiency of a motor coil by a relative increase in a cross-section area ratio of a conductor in a cross-section area of the insulated wire when the wire is subjected to motor forming, while a high partial discharge inception voltage and scratch resistance are exhibited. In addition thereto, the present invention can provide a small or highly efficient motor to allow selective suppression of partial discharge in an end portion of the insulated wire in which this insulated wire having excellent performance is used.

Other and further features and advantages of the invention will appear more fully from the following description, appropriately referring to the accompanying drawings.

BRIEF DESCRIPTION OF THE DRAWINGS

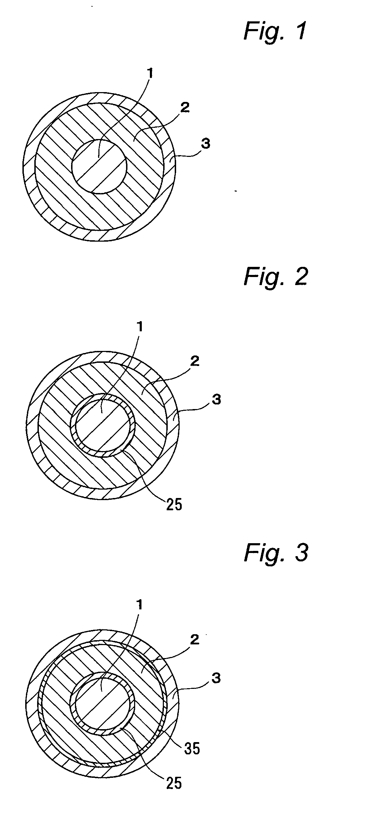

{Fig. 1}
Fig. 1 is a cross-sectional view showing an embodiment of the insulated wire of the present invention.
{Fig. 2}
Fig. 2 is a cross-sectional view showing another embodiment of the insulated wire of the present invention.
{Fig. 3}
Fig. 3 is a cross-sectional view showing still another embodiment of the insulated wire of the present invention.
{Fig. 4}
Fig. 4 is a cross-sectional view showing yet another embodiment of the insulated wire of the present invention.
{Fig. 5}
Fig. 5 is a cross-sectional view showing another embodiment of the insulated wire of the present invention.
{Fig. 6}
Fig. 6 is a cross-sectional view showing still another embodiment of the insulated wire of the present invention.

DESCRIPTION OF EMBODIMENTS

An embodiment of the foamed wire of the present invention will be explained, with reference to the drawings.

In one embodiment of the insulated wire of the present invention, whose cross-sectional view is shown in Fig. 1, the insulated wire has, as components thereof, conductor 1 with a circular cross-section; foamed insulating layer 2 coating the outer periphery of conductor 1; and outer non-foamed insulating layer 3 coating the outer periphery of foamed insulating layer 2. In this embodiment, the cross-section of each of foamed insulating layer 2 and outer non-foamed insulating layer 3 is also circular.

In another different embodiment of the insulated wire of the present invention, whose cross-sectional view is shown in Fig. 2, the insulated wire is the same as the insulated wire shown in Fig. 1, except that inner non-foamed insulating layer 25 is provided on the inside of foamed insulating layer 2 and at the same time on the outer periphery of conductor 1.

In still another different embodiment of the insulated wire of the present invention, which is shown in Fig. 3, the insulated wire is the same as the insulated wire shown in Fig. 2, except that adhesion layer 35 has been interposed between foamed insulating layer 2 and outer non-foamed insulating layer 3.

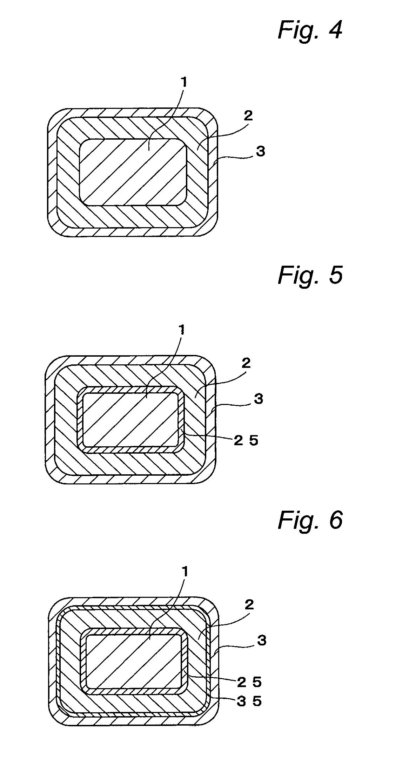

In yet another embodiment of the insulated wire of the present invention, whose cross-sectional view is shown in Fig. 4, the conductor having a rectangular cross-section is used as conductor 1, and other parts of the configuration are basically the same as the configuration of the insulated wire shown in Fig. 1. In this embodiment, since the cross-section of conductor 1 is rectangular, foamed insulating layer 2 and outer non-foamed insulating layer 3 also have rectangular cross-sections.

In another embodiment of the insulated wire of the present invention, whose cross-sectional view is shown in Fig. 5, the conductor having a rectangular cross-section is used as conductor 1, and other parts of the configuration are basically the same as the configuration of the insulated wire shown in Fig. 2. In this embodiment, foamed insulating layer 2 and outer non-foamed insulating layer 3 also have rectangular cross-sections.

In still another embodiment of the insulated wire of the present invention, whose cross-sectional view is shown in Fig. 6, the conductor having a rectangular cross-section is used as conductor 1, and other parts of the configuration are basically the same as the configuration of the insulated wire shown in Fig. 3. In this embodiment, foamed insulating layer 2 and outer non-foamed insulating layer 3 also have rectangular cross-sections.

In the Figures shown above, the same reference symbols respectively mean the same members, and further description will not be repeated herein.

In the present invention, the inner non-foamed insulating layer is basically the same as the foamed insulating layer, except that the inner non-foamed insulating layer has no cells.

Further, in the present invention, adhesion layer 35 is provided between foamed insulating layer 2 and outer non-foamed insulating layer 3 and it is a layer for improving an interlayer adhesion force between foamed insulating layer 2 and outer non-foamed insulating layer 3.

As conductor 1 which is used in the insulated wire of the present invention, any wire which has conventionally been used in the insulated wire may be used. For example, it is formed of copper, copper alloy, aluminum, aluminum alloy or a combination thereof.

A transverse section (cross section perpendicular to the axis line) of conductor 1 is not particularly limited, and one having a desired form can be used therefor, and specific examples include a circular form and a rectangular form. In view of an occupation ratio relative to a stator slot, conductor 1 preferably has a form having at least one corner on the transverse section, for example, a flat square form (rectangle) as shown in Fig. 4 to Fig. 6. Furthermore, in terms of suppressing partial discharge from the corners, it is preferable that chamfers (radius r) are formed at the four corners.

Inner non-foamed insulating layer 25 is a layer which is formed on the outer periphery of conductor 1, and also formed of a thermosetting resin for forming foamed insulating layer 2 as mentioned later into a state where the layer has no cells, namely, into a non-foamed state. In the present invention, inner non-foamed insulating layer 25 is formed if desired. The state where the layer has no cells herein means not only a state in which no cells exist at all but also a case where cells exist. More specifically, inner non-foamed insulating layer 25 is formed according to a method by which no cells are positively formed, but the layer may have, for example, one piece of cell or less per $cm^2$ of an arbitrary cross section present therein.

Foamed insulating layer 2 is a layer which includes a thermosetting resin having cells, namely, a foamed thermosetting resin, and is formed on the outer periphery of conductor 1. If foamed insulating layer 2 has the cells, a relative dielectric constant of foamed insulating layer 2 decreases due to air existing inside the cells, and when voltage is applied to the insulated wire wound in the motor, partial discharge or corona discharge that are generated in an air gap between mutually adjacent insulated wires can be suppressed.

The cells which foamed insulating layer 2 has may be closed cells or open cells, or may include both thereof. The closed cells herein refer to ones in which no holes, namely, no openings communicated with adjacent cells can be confirmed in a cell inner wall, when the cross section of foamed insulating layer 2 cut in an arbitrary cross-section is observed using a microscope, and the open cells herein refer to ones in which holes can be confirmed in the cell inner wall when the cross-section is observed in a similar manner. The cells preferably include the closed cells in that even if the cells change their shapes by momentary collapse in a longitudinal direction, namely, in a thickness direction, the cells are easy to restore the former shape when internal pressure is increased and the pressure is released, while maintaining abrasion characteristics and mechanical characteristics of foamed insulating layer 2. Moreover, the cells preferably include the closed cells, from the point of being able to suppress rising of the relative dielectric constant, without penetration of a solvent or the like into the inside of the cells to cause bury of a cell part, even if the wire is immersed into the solvent or the like.

In the present invention, within the range in which ease of collapse of foamed insulating layer 2 and required characteristics of the insulated wire are satisfied, foamed insulating layer 2 preferably has the closed cells, and a ratio of closed cells based on the total number of cells is more preferably 70% or more, and still more preferably 90% or more. In addition, the upper limit of the ratio of the closed cells is obviously 100%, and substantially 99% or less. The ratio of the closed cells can be adjusted depending on an expansion ratio, a resin concentration in varnish, viscosity, temperature during varnish application, an amount of addition of a foaming agent, temperature in a baking furnace, or the like.

The ratio of the closed cells can be calculated by counting the total number of cells and the number of closed cells existing (opened) in an observation region in which the cross-section of foamed insulating layer 2 cut in an arbitrary cross-section is observed using a scanning electron microscope (SEM), and dividing the number of closed cells by the total number of cells. In addition, in the open cells, one piece of hole opened to the inner wall of the cells is also counted as one cell, in addition to the cells to be counted.

An average cell size of the cells is preferably 5 $\mu$m or less from the point of being able to satisfactorily maintain a dielectric breakdown voltage, more preferably 3 $\mu$m or less from the point of being able to further securely hold the dielectric breakdown voltage, and still more preferably 1 $\mu$m or less. Although the lower limit of the average cell size is not limited, it is practical and preferable that the lower limit is 1 nm or more. The average cell size is a value obtained in such a way that a cross-section of foamed insulating layer 2 is observed with a scanning electron microscope (SEM), and then the diameter of each of arbitrarily-selected 20 cells is measured in a diameter measurement mode using an image size measurement software (WinROOF, manufactured by MITANI Corporation), and then the measured values are averaged to obtain the average cell size.

In addition, when the form of the cells is not circular, a longest part is taken as a diameter. This cell size can be adjusted depending on an expansion ratio, a resin concentration in varnish, viscosity, temperature during varnish application, amount of addition of a foaming agent, temperature in a baking furnace, or the like.

In view of exhibiting a high dielectric breakdown voltage due to a decrease in the relative dielectric constant, foamed insulating layer 2 has preferably a porosity of 10% or more, more preferably a porosity of 20% or more, and still more preferably a porosity of 30% or more. In view of mechanical strength of foamed insulating layer 2, the porosity is preferably 80% or less, more preferably 70% or less, and still more preferably 60% or less. The porosity of foamed insulating layer 2 can be adjusted depending on an expansion ratio, a resin concentration in varnish, viscosity, temperature during varnish application, an amount of addition of a foaming agent, temperature in a baking furnace, or the like.

The porosity is calculated, from a volume (V1) of foamed insulating layer 2 and a volume (V2) of the cells, according to the formula: $V2/V1 \times 100$ (%). Herein, the volume (V1) of foamed insulating layer 2 is calculated according to a conventional method, and the volume (V2) of the cells can be calculated by using a fact that a density of the cells is 0 and using a density of the thermosetting resin for forming foamed insulating layer 2.

Foamed insulating layer 2 has a thickness deformation ratio of 15% or more upon applying a pressure of 1 MPa at 25°C, specifically, upon clamping the layer by applying the pressure of 1 MPa from a diametrical direction. If the thickness deformation ratio is 15% or more, foamed insulating layer 2 is preferentially deformed and a film thickness of the insulated wire decreases upon winding the insulated wire into the stator slot to form the motor. As a result, when the stator slot has a predetermined size, the insulated wire can be wound thereinto with a large winding number to allow contribution to improvement in efficiency of a motor coil, namely, the motor. On the other hand, when the winding number is identical, the insulated wire can contribute to miniaturization of the motor coil, namely, the motor. From the point of being able to contribute to further miniaturization and improvement in efficiency of the motor coil, the thickness deformation ratio is preferably 20% or more, and more preferably 25% or more. On the other hand, in view of maintaining insulating characteristics, abrasion resistance and flexibility, the thickness deformation ratio is preferably 50% or less. The thickness deformation ratio can be adjusted depending on a kind of the thermosetting resin for forming foamed insulating layer 2, cell size, porosity, an expansion ratio or the like.

The thickness deformation ratio of foamed insulating layer 2 is calculated, from a thickness Ti (a half of an outer diameter of foamed insulating layer 2)) of foamed insulating layer 2 in the insulated wire before pressure application and a thickness Ta (a half of a diameter of the compressed foamed insulating layer 2) of the (compressed) deformed foamed insulating layer 2 upon application of the pressure of 1 MPa, according to the following formula:

$$\text{Formula: } (Ta/Ti) \times 100 \ (\%)$$

In addition, a method for applying the pressure of 1 MPa to foamed insulating layer 2 is not particularly limited, as long as the pressure of 1 MPa can be applied in the diametrical direction of foamed insulating layer 2 according to the method, and specific examples include a method for applying the pressure of 1 MPa to two sheets of stainless steels which clamp the insulated wire. According to this method, the pressure of 1 MPa is not always directly applied to foamed insulating layer 2. However, outer non-foamed insulating layer 3 has only a small thickness and hardly absorbs the pressure, and therefore the method practically produces an effect identical with application of 1 MPa onto the insulated wire. Thus, the thickness deformation ratio of foamed insulating layer 2 can be measured.

With regard to a thickness of foamed insulating layer 2, a ratio of the thickness of foamed insulating layer 2 to a thickness of outer non-foamed insulating layer 3 (hereinafter, referred to as a thickness ratio) is within the range of 20 : 80 to 80 : 20. As the thickness of foamed insulating layer 2 is larger, the relative dielectric constant further decreases, and the partial discharge inception voltage can be raised, and the thickness deformation ratio is apt to become large. On the other hand, as the thickness of outer non-foamed insulating layer 3 is larger, the mechanical characteristics such as the strength and the flexibility are improved. If the thickness of foamed insulating layer 2 is within the above-mentioned range, a good balance between the partial discharge inception voltage, the thickness deformation ratio and the mechanical characteristics can be achieved. From the point of being able to strike a balance between the partial discharge inception voltage, the thickness deformation ratio of the insulated wire and the mechanical characteristics at a high level, the thickness ratio is more preferably in the range of 30 : 70 to 75 : 25, and particularly preferably in the range of 35 : 65 to 40 : 60.

The thickness of foamed insulating layer 2 is not particularly limited, as long as the above-mentioned thickness ratio is within the range of 20 : 0 to 80 : 20, and the thickness is practically 10 to 200 $\mu$m, and such a range is preferred.

Accordingly, the thickness of foamed insulating layer 2 is selected from the range of 10 to 200 μm so as to satisfy the thickness ratio.

On the outside of foamed insulating layer 2, the outer non-foamed insulating layer is formed using a resin having strong resistance to scratch to allow appropriate deformation by pressure being applied, and thus is designed to be adjustable to a minimum required film thickness according to a shape and space to be desirably used. Thus, when an identical conductor is used, the wire can be formed into an insulating wire having a higher conductor space factor. The present inventors have found that the conductor space factor in the cross-section is improved to allow improvement in efficiency thereof, when the insulated wire is shaped into a coil form for a product including the motor.

Further, a film part is deformed to allow bury of a part of air in which the partial discharge is generated. Thus, the partial discharge becomes hard to occur, and therefore the partial discharge inception voltage can be maintained and improved without changing the space factor, heat resistance or the like.

The thermosetting resin for forming foamed insulating layer 2 preferably includes one that can be directly or indirectly applied as the varnish onto conductor 1, baked to form the cells and to allow formation of a foamed insulating film. Herein, the expression "indirectly applied" means that a varnish is applied onto conductor 1 through another layer, for example, inner non-foamed insulating layer 25. As such a thermosetting resin to be incorporated into the varnish, for example, polyimide (PI), polyamideimide (PAI), polyesterimide (PEsI), polyester or the like can be used.

The thermosetting resin is preferably PAI, PI, polyester or PEsI that has a glass transition temperature of 150°C or higher and contributes to improvement in the heat resistance of the insulated wire. The thermosetting resin is more preferably PAI. The glass transition temperature of the thermosetting resin is more preferably 210 to 350°C in view of the heat resistance. The glass transition temperature of the thermosetting resin can be measured by differential scanning calorimetry (DSC). In addition, the thermosetting resin to be used may be used alone in one kind or in combination with two or more kinds.

The polyamideimide is not particularly limited. Specific examples include one obtained by an ordinary method, for example, one obtained by allowing diisocyanates to directly react with tricarboxylic anhydride in a polar solvent, or one obtained by mixing diamines to tricarboxylic anhydride to allow amidization with diisocyanates. Further, as the PAI, a commercially available product (for example, HI-406 (trade name, manufactured by Hitachi Chemical Co., Ltd.) can be used.

The polyimide is not particularly limited. Specific examples include an ordinary polyimide resin such as thermosetting aromatic polyimide, and such as one using a polyamide acid solution obtained by allowing aromatic tetracarboxylic dianhydride to react with aromatic diamines in a polar solvent and allowing imidization of the resultant reaction mixture by heat treatment upon forming the insulating film thereby allowing thermal curing. Specific examples of a commercially available polyimide resin include U-IMIDE (trade name, manufactured by UNITIKA LTD.), U-Varnish (trade name, manufactured by Ube Industries, Ltd.), HCI Series (trade name, manufactured by Hitachi Chemical Co., Ltd.), and AURUM (trade name, manufactured by Mitsui Chemicals, Inc.).

The polyester that can be used in the present invention is not particularly limited. Examples of the polyester resin include one modified by adding a phenol resin or the like to an aromatic polyester. Specific examples thereof include a polyester resin whose heat resistance is of an H-class. Examples of the commercially available H-class polyester resin include Isonel 200 (trade name, manufactured by Schenectady International, Inc.).

The polyesterimide is not particularly limited. Specific examples include, according to an ordinary method, one obtained by allowing tricarboxylic anhydride to directly react with diisocyanates to form an imide skeleton in a polar solvent, and then allowing the resultant reaction mixture to react with diols in the presence of a catalyst, and one synthesized by mixing diamines with tricarboxylic anhydride in a polar solvent to form an imide skeleton, and then allowing the resultant reaction mixture to react with diols. Specific examples of commercially available polyester imide resins include Neoheat 8200K2, Neoheat 8600, and LITON 3300 (trade names, manufactured by TOTOKU TORYO CO., LTD.).

In the present invention, various additives such as a cell nucleating agent, an oxidation inhibitor, an antistatic agent, an anti-ultraviolet agent, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickening agent, a thinning agent, and an elastomer may be incorporated into the thermosetting resin for forming foamed insulating layer 2, to the extent that the characteristics are not affected. Furthermore, aside from foamed insulating layer 2, a layer formed from a resin containing these additives may be laminated on the resulting insulated wire, or the insulated wire may be coated with a coating material containing these additives.

Moreover, in the thermosetting resin for allowing formation of cells inside thereof, a thermoplastic resin may be mixed within the range in which the heat resistance is not adversely affected. The thermoplastic resin is blended to allow provision of the mechanical characteristics required for the insulated wire, such as the flexibility, while heat deformation is suppressed in a production process. The glass transition temperature of the thermoplastic resin is preferably 150°C or higher, and more preferably 210 to 350°C. The glass transition temperature of the thermoplastic resin can be measured in a manner similar to the glass transition temperature of the thermosetting resin. An amount of addition of such a thermoplastic resin is preferably 1 to 40% by mass based on a resin solid content.

The thermoplastic resin that can be used for the purpose is preferably a non-crystalline resin in view of difficulty in generating stress due to a change in a state such as being crystallized and shrunk with heat. For example, the thermoplastic resin is preferably at least one selected from polyether imide, polyether sulfone, polyphenylene ether, polyphenylsulfone (PPSU), and polyimide.

Examples of the polyether imide that can be used include ULTEM (manufactured by GE Plastics, Inc., trade name). Examples of the polyether sulfone that can be used include SUMIKAEXCEL PES (trade name, manufactured by Sumitomo Chemical Co., Ltd.), PES (trade name, manufactured by Mitsui Chemicals, Inc.), ULTRASON E (trade name, manufactured by BASF Japan Ltd.), and RADEL A (trade name, manufactured by Solvay Specialty Polymers Japan K.K.). Examples of the polyphenylene ether that can be used include XYRON (trade name, manufactured by Asahi Kasei Chemicals Corp.) and IUPIACE (trade name, manufactured by Mitsubishi Engineering Plastics Corp.). Examples of the polyphenylsulfone that can be used include RADEL R (trade name, manufactured by Solvay Specialty Polymers Japan K.K.). Examples of the polyimide that can be used include U-VARNISH (trade name, manufactured by Ube Industries, Ltd.), HCI Series (trade name, manufactured by Hitachi Chemical Co., Ltd.), U-IMIDE (trade name, manufactured by UNITIKA LTD.), and AURUM (trade name, manufactured by Mitsui Chemicals, Inc.). From the viewpoint of being easily dissolvable in a solvent, polyphenylsulfone and polyether imide are more preferred.

In the present invention, the term "non-crystalline" means retaining an amorphous state which holds almost no crystalline structure and a characteristic that the polymer chain reaches a random state at the time of curing.

From the point of being able to reduce the relative dielectric constant of foamed insulating layer 2 formed of the thermosetting resin having cells, and also from the point of being able to adjust the thickness deformation ratio to the above-mentioned range, the expansion ratio of foamed insulating layer 2 is preferably 1.2 times or more, and more preferably 1.4 times or more. There are no particular limitations on the upper limit of the expansion ratio, but it is usually preferable to set the expansion ratio to 5.0 times or less. The expansion ratio is obtained by determining the density of a resin coated for foaming (pf) and the density of the resin before foaming (ps) by the underwater replacement method, and calculating the expansion ratio from (ps/pf).

Foamed insulating layer 2 can be obtained by mixing a thermosetting resin and two or more kinds, preferably three or more kinds, of solvents containing a specific organic solvent and at least one kind of a high-boiling solvent so as to make an insulating varnish and applying the resultant insulating varnish onto the outer periphery of conductor 1 and then baking it. The varnish may be directly or indirectly applied onto conductor 1.

The specific organic solvent for the varnish used in foamed insulating layer 2 acts as a solvent for dissolving the thermosetting resin. This organic solvent is not particularly limited as long as the organic solvent does not inhibit the reaction of the thermosetting resin, and examples thereof include amide-based solvents such as N-methyl-2-pyrrolidone (NMP), N,N-dimethylacetamide (DMAC), dimethylsulfoxide, and N,N-dimethylformamide; urea-based solvents such as N,N-dimethylethyleneurea, N,N-dimethylpropyleneurea, and tetramethylurea; lactone-based solvents such as γ-butyrolactone and γ-caprolactone; carbonate-based solvents such as propylene carbonate; ketone-based solvents such as methyl ethyl ketone, methyl isobutyl ketone, and cyclohexanone; ester-based solvents such as ethyl acetate, n-butyl acetate, butyl cellosolve acetate, butyl carbitol acetate, ethyl cellosolve acetate, and ethyl carbitol acetate; glyme-based solvents such as diglyme, triglyme, and tetraglyme; hydrocarbon-based solvents such as toluene, xylene, and cyclohexane; and sulfone-based solvents such as sulfolane. Among these, in view of high solubility, high reaction promotion properties or the like, an amide-based solvent or a urea-based solvent is preferred; and in view of having no hydrogen atom that is apt to inhibit a crosslinking reaction due to heating or the like, N-methyl-2-pyrrolidone, N,N-dimethylacetamide, N,N-dimethylethyleneurea, N,N-dimethylpropyleneurea or tetramethylurea is more preferred, and N-methyl-2-pyrrolidone is particularly preferred. The boiling point of this organic solvent is preferably 160°C to 250°C, and more preferably 165°C to 210°C.

The high boiling solvent that can be used for cell formation is a solvent having a boiling point of preferably 180°C to 300°C, and more preferably 210°C to 260°C. Specific examples that can be used for cell formation include diethylene glycol dimethyl ether, triethylene glycol dimethyl ether, diethylene glycol dibutyl ether, tetraethylene glycol dimethyl ether, and tetraethylene glycol monomethyl ether. From the viewpoint of having a smaller fluctuation in the cell size, triethylene glycol dimethyl ether is more preferred. In addition to the above solvents, the examples include dipropylene glycol dimethyl ether, diethylene glycol ethyl methyl ether, dipropylene glycol monomethyl ether, diethylene glycol diethyl ether, diethylene glycol monomethyl ether, diethylene glycol butyl methyl ether, tripropylene glycol dimethyl ether, diethylene glycol monobutyl ether, ethylene glycol monophenyl ether, triethylene glycol monomethyl ether, triethylene glycol butyl methyl ether, polyethylene glycol dimethyl ether, polyethylene glycol monomethyl ether, and propylene glycol monomethyl ether.

As a high boiling solvent, one kind thereof may be used, but at least two kinds thereof are preferably used in combination in that an effect of cell generation over a wide temperature range is obtained. Preferred combinations of at least two kinds of the high boiling solvents include tetraethylene glycol dimethyl ether with diethylene glycol dibutyl ether, diethylene glycol dibutyl ether with triethylene glycol dimethyl ether, triethylene glycol monomethyl ether with tetraethylene glycol dimethyl ether, and triethylene glycol butyl methyl ether with tetraethylene glycol dimethyl ether. More preferred combinations include diethylene glycol dibutyl ether with triethylene glycol dimethyl ether, and triethylene glycol monomethyl ether with tetraethylene glycol dimethyl ether.

The high boiling solvent for cell formation has a feature of having a higher boiling point in comparison with the specific organic solvent for dissolving the thermosetting resin thereinto, and a boiling point of the high boiling solvent to be added for cell formation may be higher by 50°C or more than an evaporation start temperature of a solvent component in the varnish. When the solvent is added to the varnish in one kind, the solvent preferably has a higher boiling point by 20°C or more than a boiling point of the specific organic solvent for the thermosetting resin at room temperature. Furthermore, it is understood that in the case where one kind of the high boiling solvent is used, the high boiling solvent takes the role of both a cell nucleating agent and a foaming agent. On the other hand, in the case where two or more kinds of the high boiling solvents are used, the solvent having the highest boiling point acts as a foaming agent, and a high boiling solvent for cell formation having an intermediate boiling point acts as a cell nucleating agent. The solvent having the highest boiling point preferably has a boiling point that is higher by 20°C or more, and more preferably by 30°C to 60°C, than the specific solvent. The high boiling solvent for cell formation having the intermediate boiling point may have a boiling point that is intermediate between the boiling point of the solvent that acts as a foaming agent and the boiling point of the specific solvent, and preferably has a difference in boiling point of 10°C or more from the boiling point of the foaming agent. In the case where the high boiling solvent for cell formation having the intermediate boiling point has a higher solubility for the thermosetting resin than the solvent that acts as a foaming agent, uniform cells can be formed after varnish baking. In the case where the two or more kinds of the high boiling solvents are used, the use ratio of the high boiling solvent having the highest boiling point to the high boiling solvent having the intermediate boiling point is, for example, preferably from 99/1 to 1/99 in terms of mass ratio, and more preferably from 10/1 to 1/10 in terms of easiness of cell formation.

In the present invention, when foamed insulating layer 2 is formed using the aforementioned two or more kinds of solvents including the high boiling solvent, a larger amount of energy is required for evaporating the high boiling solvent in comparison with the case of forming a hitherto-known insulating layer including no cells. Further, also upon forming outer non-foamed insulating layer 3, foamed insulating layer 2 exhibits a heat-insulating effect, and therefore heat energy of conductor 1 is not efficiently conducted to outer non-foamed insulating layer 3. As the layer is located outside, baking becomes more difficult.

Under such a situation, the present inventors have found that an increase in hardness of outer non-foamed insulating layer 3 by heating the layer again after completion of entire application and baking allows improvement in the performance of the insulated wire, for example, the scratch resistance, and also development of characteristics contributing to the miniaturization of the motor. More specifically, in order to exhibit excellent scratch resistance and to efficiently generate collapse by pressure so as to contribute to the miniaturization, outer non-foamed insulating layer 3 preferably has sufficient hardness. Specifically, pencil hardness of outer non-foamed insulating layer 3 is 4H or more at 25°C, and more preferably 5H or more in order to allow further collapse of outer non-foamed insulating layer 3 upon application of the pressure of 1 MPa at 25°C. If the pencil hardness of the outer non-foamed insulating layer formed of the thermosetting resin is less than 4H, the layer has poor scratch resistance, and also outer non-foamed insulating layer 3 per se is easily collapsed due to the stress applied onto outer non-foamed insulating layer 3. Therefore, the stress cannot be efficiently transferred to foamed insulating layer 2, and the insulated wire of the present invention becomes hard to shrink. Further, when the layer is subjected to the stress from a projected portion or the like, only a stressed portion shrinks, and therefore reduction of a volume of the insulating film as a whole becomes difficult. In addition, higher hardness of outer non-foamed insulating layer 3 obviously improves performance of the abrasion resistance, such as resistance to friction during coil molding as the insulated wire.

An upper limit of the pencil hardness of outer non-foamed insulating layer 3 is 9H. The pencil hardness of outer non-foamed insulating layer 3 is expressed in terms of the hardness (enameled wire) according to the pencil hardness method specified in JIS-K 5600-5-4, and a value obtained by measuring outer non-foamed insulating layer 3 according to this pencil hardness method. This pencil hardness can be measured using Electric System Pencil Scratch Hardness Tester (No. 553-M1 (trade name), manufactured by YASUDA SEIKI SEISAKUSHO, LTD.). The pencil hardness of outer non-foamed insulating layer 3 has a value identical with the pencil hardness of the resin for forming outer non-foamed insulating layer 3, and therefore can be adjusted by adopting a resin having the pencil hardness within the above mentioned range.

Outer non-foamed insulating layer 3 is formed of the thermosetting resin on the outside of foamed insulating layer 2. If outer non-foamed insulating layer 3 is formed of the thermosetting resin, the layer has the above-mentioned pencil hardness, and the stress or load acting on outer non-foamed insulating layer 3 can be effectively transferred to foamed insulating layer 2. The thermosetting resin for forming outer non-foamed insulating layer 3 is not particularly limited, and various kinds of thermosetting resins exemplified in foamed insulating layer 2 can be used therefor. In particular, the thermosetting resin is preferably selected such that outer non-foamed insulating layer 3 has the above-mentioned pencil hardness. Specifically, the pencil hardness of the thermosetting resin to be selected is preferably within the above-mentioned range. In addition to the above-mentioned hardness, the thermosetting resin preferably has heat resistance because the insulated wire of the present invention is preferably used for the motor. Specific examples preferably include a polyester resin, a polyimide resin, a polyesterimide resin and a polyamideimide resin. The thermosetting resin may be used in one kind, or in the form of a mixture of two or more kinds thereof. In addition, the resin to be used is not limited by resin names described above, and a resin other than the resins previously listed can be obviously used, if the resin is more excellent in performance in comparison with the resins.

In outer non-foamed insulating layer 3, the thermoplastic resin may be blended with the thermosetting resin in the range in which the hardness and the heat resistance of the thermosetting resin are not adversely affected because the mechanical strength or the like required for the insulated wire, such as the flexibility tends to rise when the thermoplastic resin is blended therewith. In this case, a content of the thermoplastic resin in outer non-foamed insulating layer 3 is 5 to 40% by mass, and particularly preferably 5 to 20% by mass, in the resin components for forming outer non-foamed insulating layer 3. If the thermoplastic resin is added in an amount exceeding the above range, solvent resistance or heat distortion temperature is decreased in several cases.

Specific examples of the thermoplastic resin to be blended with the thermosetting resin include polycarbonate (PC), modified polyphenylene ether (mPPE), polyallylate, a syndiotactic polystyrene resin (SPS), polyamideimide, polybenzimidazole (PBI), polysulfone (PSF), polyethersulfone (PES), polyetherimide (PEI), polyphenylsulfone and a non-crystalline thermoplastic polyimide resin. In addition, the resin to be used is not limited by resin names described above, and a resin other than the resins previously listed can be obviously used, if the resin is further excellent in performance in comparison with the resins.

The thermosetting resin for forming outer non-foamed insulating layer 3 (including the blend with the thermoplastic resin; the same applies hereafter.) more preferably has a storage elastic modulus of 1 GPa or more at 25°C. When the storage elastic modulus at 25°C is less than 1 GPa, an effect of deformation of the thermosetting resin is high, but the abrasion characteristics decrease. Therefore, a function as a winding wire cannot be developed in several cases, such as breaking of the resin upon coil forming, or the like to produce a problem of necessity to secure low load conditions or the like. The storage elastic modulus of the thermosetting resin used for outer non-foamed insulating layer 3 is more preferably 2 GPa or more at 25°C. However, in the case of too high storage elastic modulus, there arises a problem that flexibility required for the winding reduces after all and therefore it is favorable that the upper limit is, for example, 6 GPa.

The storage elastic modulus of the thermosetting resin is a value that is measured by using a viscoelasticity analyzer (DMS200 (trade name): manufactured by Seiko Instruments Inc.). In particular, by using a 0.2 mm thick specimen which has been prepared with the thermosetting resin, and by recording a measured value of the storage elastic modulus at the state when the temperature is stabilized at 25°C under the conditions that a rate of temperature increase is 2°C/min and a frequency is 10Hz, the recorded value is defined as a storage elastic modulus at 25°C of the thermosetting resin.

Outer non-foamed insulating layer 3 contains substantially no partial discharge resistant substance. Herein, the partial discharge resistant material refers to an insulating material that is not susceptible to partial discharge deterioration, and the material has an action of enhancing the characteristic of voltage-applied lifetime by dispersing the material in the insulating film of the wire. Examples of the partial discharge resistant material include oxides (oxides of metals or non-metal elements), nitrides, glass and mica, and specific examples of the partial discharge resistant material include fine particles of silica, titanium dioxide, alumina, barium titanate, zinc oxide, and gallium nitride. Further, the expression "contains substantially no" partial discharge resistant substance means that the partial discharge resistant substance is not contained in outer insulating layer 3 in a positive manner, and therefore this expression incorporates not only the case where the substance is not included at all, but also the case where the substance is included in a content of such a degree that the purpose of the present invention is not impaired. Examples of the content of such a degree that the purpose of the present invention is not impaired include the content of 30 parts by mass or less with respect to 100 parts by mass of the resin component which forms outer insulating layer 3. In particular, when powder is added, a dispersant may be added thereto.

Various additives such as an oxidation inhibitor, an antistatic agent, an anti-ultraviolet agent, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickening agent, a thinning agent, and an elastomer may be incorporated into thermosetting resin for forming outer non-foamed insulating layer 3, to the extent that the characteristics are not affected.

The thickness of outer non-foamed insulating layer 3 is not particularly limited as long as the above-mentioned thickness ratio is in the range of 20 : 80 to 80 : 20, and the thickness is practically and preferably 20 to 150 μm. As mentioned above, the thickness of outer non-foamed insulating layer 3 is determined in consideration of the partial discharge inception voltage and the mechanical characteristics, and preferably satisfies the above-mentioned thickness ratio.

Outer non-foamed insulating layer 3 can be formed by shaping the varnish containing the thermosetting resin around foamed insulating layer 2 according to a shaping method applying heating and baking such as a cast method. This baking is ordinarily performed by heating the varnish at temperature equal to or higher than the temperature at which the thermosetting resin is cured. Heating time depends on a heating system, heating temperature, a type of furnace or the like. For example, specific baking conditions can be attained by setting a transit time preferably to 10 to 90 seconds at 400 to 600°C to be applied, if a hot air circulation vertical furnace having about 5 m is used.

In the present invention, the thus baked varnish is heated again to raise the hardness of the thermosetting resin, more specifically, the hardness of outer non-foamed insulating layer 3 to be formed. Specifically, the baked varnish is heated to 400 to 1,000°C for 0.25 to 600 seconds. Thus, outer non-foamed insulating layer 3 is formed. The shaping of the varnish may be formed directly on the outer periphery of foamed insulating layer 2, or may be formed by interposing another resin layer, for example, adhesion layer 35, in between. In this varnish, in addition to the thermosetting resin, for example, various kinds of additives or the above-described organic solvents and the like, which are added to a varnish for forming foamed insulating layer 2, may be contained to the extent that the characteristics are not affected.

Adhesion layer 35, if desired, is formed of a crystalline or non-crystalline resin, between foamed insulating layer 2 and outer non-foamed insulating layer 3. Adhesion layer 35 and outer non-foamed insulating layer 3 may be formed of the same resin, or may be formed of a different resin from one another. Specific examples of a resin different from the resin of outer non-foamed insulating layer 3 include the above-mentioned thermoplastic resins such as polyetherimide and polyphenylsulfone. Adhesion layer 35 is formed, for example, as a thin film of less than 5 $\mu$m after the foamed insulating layer is formed. Meanwhile, depending on the forming conditions of outer insulating layer 3, an accurate thickness thereof may not be measured when adhesion layer 35 and outer insulating layer 3 has intermingled with each other to form an insulated wire.

The insulated wire of the present invention can be produced by forming a foamed insulating layer on the outer periphery of a conductor, and then forming thereon an outer non-foamed insulating layer. Specifically, the insulated wire can be produced by performing a step of forming foamed insulating layer 2 by applying directly or indirectly, namely if desired, through inner non-foamed insulating layer and the like, a varnish for forming foamed insulating layer 2 on the outer periphery of conductor 1, and generating foams in the process of baking; and a step of forming the outer non-foamed insulating layer by applying and baking a varnish for forming the outer non-foamed insulating layer on the outer periphery of the foamed insulating layer. Each step is as mentioned above.

Inner non-foamed insulating layer can be formed respectively by applying a varnish for forming the non-foamed insulating layer and then baking it, or by molding a resin composition.

Adhesion layer 35 can be formed by applying, onto foamed insulating layer 2, a coating material in which a non-crystalline resin has been dissolved in a solvent, and then evaporating the solvent. In addition, in the coating material for forming the adhesion layer, a component identical with the component of the coating material to be used for foamed insulating layer 2 or outer non-foamed insulating layer 3 may be contained in the solvent.

The insulated wire of the present invention preferably has at least one foamed insulating layer. For example, the insulated wire may have a plurality of foamed insulating layers through the above-mentioned inner non-foamed insulating layer. Such a foamed insulating layer may be arranged directly on the conductor, or may be arranged in the outer periphery of the conductor through any other layer.

In the insulated wire of the present invention, an adhesion layer containing an adhesion-improving agent, which is excellent in the adhesion properties with the conductor, may be formed. The adhesion layer can be formed by applying the thermosetting resin varnish for the adhesion layer onto the conductor, and curing the varnish by baking. When such an adhesion layer is formed, in particular, the adhesion properties at an initial stage, more specifically, the adhesion properties of the insulating film in a step for forming the insulating film onto the conductor can be improved.

Examples of the thermosetting resin that can be used for the adhesion layer include a polyimide, a polyurethane, a polyamideimide, a polyester, a polybenzimidazole, a polyphenylsulfone, a polyesterimide, a melamine resin, and an epoxy resin.

As the adhesion-improving agent, those ordinarily used as the adhesion-improving agents for the insulated wire may be used, such as a silane alkoxide-based adhesion-improving agent (silane coupling agent), a titanium-based adhesion-improving agent such as titanium alkoxide, titanium acylate, and titanium chelate, a triazine-based adhesion-improving agent, an imidazole-based adhesion-improving agent, a melamine-based adhesion-improving agent, a carbodiimide-based adhesion-improving agent, and a thiol-based adhesion-improving agent.

An addition amount of the adhesion-improving agent is not particularly limited, but is preferably 0.01 % by mass or more, preferably 10% by mass or less, and preferably from 0.01% to 10% by mass, based on a solid content of the resin. Moreover, a thickness of the adhesion layer is not particularly limited, but is preferably 1 $\mu$m or more.

The insulated wire of the present invention has the above-described features and therefore it is applicable to a field which requires resistance to voltage and heat resistance, such as various kinds of electric equipment (may be also called electronic equipment). For example, the insulated wire of the present invention is used for a motor, a transformer and the like, which can compose high-performance electric equipment. In particular, the insulated wire is preferably used as a winding for a driving motor of HV (Hybrid Vehicles) and EV (Electric Vehicles). As just described, the present invention can provide electric equipment, particularly a driving motor of HV and EV, equipped with the insulated wire. Meanwhile, in the case where the insulated wire of the present invention is used for a motor coil, it is also called an insulated wire for the motor coil.

As the motor in which the insulated wire of the present invention is used for the motor coil as the winding wire, a motor is preferred in which the motor comprises winding the insulated wire of the present invention into the stator slot in a state in which pressure is applied in the direction of reducing the outer diameter of the insulated wire of the present invention to reduce the thickness of the insulating layer of the insulated wire of the present invention. Thus, in the motor of the present invention, a wound part other than the end portion of the insulated wire of the present invention is collapsed, and the end portion is arranged in a state in which the end portion is neither wound into the stator slot nor collapsed. Thus, the motor can attain high efficiency even with a small size, and also the partial discharge in the end portion in which the partial discharge is easily generated can be selectively suppressed. The reason why the partial discharge in the end portion of the insulated wire can be thus selectively suppressed in the motor of the present invention is that the end portion is neither wound into the stator slot nor collapsed, and therefore the relative dielectric constant that is decreased due to foamed insulating layer 2 can be maintained. On the other hand, the reason why the motor of the present invention can attain the high efficiency even with the small size is that the insulated wire of the present invention is wound into the stator slot such that the central portion of the wire is collapsed, and thus a larger number of the insulated wires can be wound into the stator slot.

Thus, the motor of the present invention is constituted such that the end portion in which the partial discharge is easily caused is not collapsed in foamed insulating layer 2 to maintain the small relative dielectric constant, and on the other hand, the central portion in which the partial discharge is comparatively hard to cause is collapsed to allow winding of a larger number of wires. More specifically, the present invention can provide a small and highly efficient motor that is hard to cause the partial discharge, although realization of such a motor has been difficult so far, by allowing no collapse of a place where the partial discharge is easily caused, and allowing collapse of a part that is hard to cause the partial discharge, in the foamed insulating layer which is easily collapsed and of which relative dielectric constant is reduced.

Meanwhile, in the motor of the present invention, specific examples of structure that allows miniaturization of the motor without collapsing the end portion of the insulated wire include a stator that is constituted of a rotating electric machine equipped with a cylindrical stator core having slots and teeth, and a stator winding wire stored in the slots. The enameled wire is shaped into a coil structure, subjected to concentrated winding around each of teeth of the stator and stored in the stator, and both ends pulled out to an outside of the stator are appropriately bonded with a conductor whose insulating layer is peeled and exposed, and thus the highly efficient motor is formed. Meanwhile, the insulated wire of the present invention is subjected to coil forming in a surface contact state with each other, but may be aligned with each other therein.

EXAMPLES

The present invention will be described in more detail based on examples given below, but the invention is not meant to be limited by these. Meanwhile, in the following Examples, the percent value (%) indicating the composition means percent (%) by mass.

Insulated wires of Examples and Comparative Examples were produced as follows.

(Example 1)

The insulated wire shown in Fig. 2 was produced as follows. First, a foamable polyamideimide varnish used for forming foamed insulating layer 2 was prepared as follows. In a 2L volumetric separable flask, HI-406 (trade name, manufactured by Hitachi Chemical Co., Ltd.) was placed, and triethylene glycol dimethyl ether and diethylene glycol dibutyl ether as cell forming agents were added thereto, and further the resultant was diluted with dimethylsulfoxide. Thus, the foamable polyamideimide varnish was obtained.

In addition, as a polyamideimide varnish for forming inner non-foamed insulating layer 25, which is used to form inner non-foamed insulating layer 25, HI-406 was used and this varnish was adjusted to a 30% by mass solution using NMP as a solvent.

Each varnish was applied by dip coating, and a coating amount thereof was adjusted using a die. Specifically, the thus-prepared polyamideimide varnish for forming inner non-foamed insulating layer 25 was applied onto copper-made conductor 1 having a 1.0 mm $\varphi$ circular in cross-section and this was baked at a furnace temperature of 510°C to form inner non-foamed insulating layer 25 with a thickness of 4 $\mu$m. Next, the thus-prepared foamable polyamideimide varnish was applied onto inner non-foamed insulating layer 25. This was baked at a furnace temperature of 505°C to form foamed insulating layer 2 with a thickness of 19 $\mu$m. A molding (may be also referred to as an undercoating wire) of inner non-foamed insulating layer 25 and foamed insulating layer 2 formed in this way was obtained.

Subsequently, HI-406 (trade name, manufactured by Hitachi Chemical Co., Ltd.) was coated on the undercoating wire so as to have a thickness of 33 $\mu$m while baking the wire at a furnace temperature of 510°C, and then the coated wire was heated again for 2 seconds in a tubular furnace (KTF030N1 (trade name), manufactured by Koyo Thermo Systems Co., Ltd.) heated to 600°C to form outer non-foamed insulating layer 3. Thus, the insulated wire in Example 1 was produced.

(Example 2)

The insulated wire shown in Fig. 1 was produced as follows. The foamable polyamideimide varnish prepared in Example 1 was applied directly onto the outer periphery of copper conductor 1 having a 1.0 mm φ circular in cross-section, and this was baked at a furnace temperature of 510°C to obtain a molding (undercoating wire) in which foamed insulating layer 2 had been formed with a thickness of 20 μm. Subsequently, HI-406 (trade name, manufactured by Hitachi Chemical Co., Ltd.) was coated on the undercoating wire so as to have a thickness of 80 μm while baking the wire at a furnace temperature of 510°C, and then the coated wire was heated again for 20 seconds in a tubular furnace (KTF030N1 (trade name), manufactured by Koyo Thermo Systems Co., Ltd.) heated to 600°C to form outer non-foamed insulating layer 3. Thus, the insulated wire in Example 2 was produced.

(Example 3)

The insulated wire shown in Fig. 5 was produced as follows. First, a foamable polyimide varnish used for forming foamed insulating layer 2 was prepared as follows. In a 2L volumetric separable flask, U-IMIDE (an NMP solution of 25% by mass of the resin component) (trade name, manufactured by UNITIKA LTD.) was placed, and NMP, DMAC and tetraethylene glycol dimethylether as solvents were added thereto. Thus, the foamable polyimide varnish was obtained.
As a polyimide varnish for forming inner non-foamed insulating layer 25, which is used to form inner non-foamed insulating layer 25, U-IMIDE was used and this varnish was adjusted by adding DMAC as a solvent.
Onto the outer periphery of flat square copper-made conductor 1 having a size of 1.8 × 3.4 mm (thickness × width) and a chamfer radius r of 0.3 mm on the four corners, the polyimide varnish for forming the inner non-foamed insulating layer was applied, and the resultant material was baked at a furnace temperature of 520°C to form inner non-foamed insulating layer 25 having a thickness of 4 μm. Next, the thus-prepared foamable polyamideimide varnish was applied onto inner non-foamed insulating layer 25. This was baked at a furnace temperature of 520°C to form foamed insulating layer 2 with a thickness of 60 μm. A molding (undercoating wire) of inner non-foamed insulating layer 25 and foamed insulating layer 2 formed in this way was obtained.
Subsequently, polyimide varnish (U-IMIDE) was coated on the undercoating wire so as to have a thickness of 30 μm while baking the wire at a furnace temperature of 505°C, and then the coated wire was heated again for 20 seconds in a tubular furnace (KTF030N1 (trade name), manufactured by Koyo Thermo Systems Co., Ltd.) heated to 700°C to form outer non-foamed insulating layer 3. Thus, the insulated wire in Example 3 was produced.

(Example 4)

The insulated wire shown in Fig. 6 was produced as follows. First, a foamable polyesterimide varnish (in Table 1, PEsI) used to form foamed insulating layer 2 was prepared as follows. In a 2L volumetric separable flask, polyesterimide varnish (Neoheat 8600A; trade name, manufactured by TOTOKU TORYO CO., LTD.) was placed, and NMP, MAC and triethyleneglycol dimethylether as solvents were added thereto. Thus, the foamable polyesterimide varnish was obtained.
As a polyesterimide varnish for forming inner non-foamed insulating layer 25, which is used to form inner non-foamed insulating layer 25, Neoheat 8600A was used and this varnish was adjusted to a 30% solution by adding DMAC as a solvent.
Onto the outer periphery of flat square copper-made conductor 1 having a size of 1.8 × 3.4 mm (thickness × width) and a chamfer radius r of 0.3 mm on the four corners, the polyesterimide varnish for forming the inner non-foamed insulating layer was applied, and the resultant material was baked at a furnace temperature of 500°C to form inner non-foamed insulating layer 25 having a thickness of 3 μm. Next, the thus-prepared foamable polyesterimide varnish was applied onto inner non-foamed insulating layer 25. This was baked at a furnace temperature of 520°C to form foamed insulating layer 2 with a thickness of 30 μm. Further, a liquid prepared by dissolving 20 g of PPSU (Radel R (trade name), manufactured by Solvay S.A.) into 100 g of NMP was applied thereonto, and the resultant material was baked at 520°C. Thus, a molding (undercoating wire) in which inner non-foamed insulating layer 25, foamed insulating layer 2 and adhesion layer 35 (3 μm in thickness) were formed was obtained.
Subsequently, HI-406 (trade name, manufactured by Hitachi Chemical Co., Ltd.) was coated on the undercoating wire so as to have a thickness of 90 μm while baking the wire at a furnace temperature of 520°C, and then the coated wire was heated again for 20 seconds in a tubular furnace (KTF030N1 (trade name), manufactured by Koyo Thermo Systems Co., Ltd.) heated to 600°C to form outer non-foamed insulating layer 3. Thus, the insulated wire in Example 4 was produced.

(Example 5)

The insulated wire shown in Fig. 6 was produced as follows. Onto the outer periphery of flat square copper-made conductor 1 having a size of 1.8 x 3.4 mm (thickness × width) and a chamfer radius r of 0.3 mm on the four corners, the polyamideimide varnish for forming the inner non-foamed insulating layer as prepared in Example 1 was applied, and the resultant material was baked at a furnace temperature of 520°C to form 3 μm-thick inner non-foamed insulating layer 25. Subsequently, foaming polyester varnish LITON 2100S (trade name, manufactured by Totoku Toryo Co., LTD, a solution containing 40% by mass of resin component) was applied onto inner non-foamed insulating layer 25, and the resultant material was baked at a furnace temperature of 505°C to form 33 μm-thick foamed insulating layer 2. Further, a liquid obtained by dissolving polyetherimide (PEI, ULTEM (trade name), manufactured by SABIC) into NMP was applied thereonto, and the resultant material was baked at 520°C. Thus, a molding (may be also referred to as an undercoating wire) in which inner non-foamed insulating layer 25, foamed insulating layer 2 and adhesion layer 35 (3 μm in thickness) were formed was obtained.

Subsequently, the polyimide varnish (U-IMIDE) prepared in Example 3 was coated on the undercoating wire and baked at a furnace temperature of 520°C so as to have a thickness of 30 μm, and then the resultant coating was heated again for 20 seconds in a tubular furnace (KTF030N (trade name), manufactured by Koyo Thermo Systems Co., Ltd.) heated to 700°C to form outer non-foamed insulating layer 3. Thus, the insulated wire in Example 5 was produced.

(Example 6)

The insulated wire shown in Fig. 1 was produced as follows. Onto the outer periphery of copper-made conductor 1 having a 1.0 mm φ circular in cross-section, the foaming polyamideimide varnish prepared in Example 1 was directly applied, and the resultant material was baked at a furnace temperature of 530°C to obtain a molding (undercoating wire) in which foamed insulating layer 2 had been formed with a thickness of 20 μm.

On the other hand, a varnish to be used for forming outer non-foamed insulating layer 3 was prepared as described below. More specifically, polyamideimide (HI-406), and polycarbonate (PC, lupilon (trade name), manufactured by Mitsubishi Engineering-Plastics Corporation), which is a thermoplastic resin, were mixed. To 1,000 g of the mixture, NMP was used as a solvent to make a solution.

Subsequently, the prepared solution was applied onto the prepared undercoating wire, and the resultant material was coated on the undercoating wire and baked at a furnace temperature of 450°C so as to have a thickness of 30 μm, and the resultant coating was heated again for 1 second in a tubular furnace (KTF030N1) (trade name), manufactured by Koyo Thermo Systems Co., Ltd.) heated to 400°C, to form outer non-foamed insulating layer 3. Thus, the insulated wire in Example 6 was produced.

(Example 7)

The insulated wire shown in Fig. 2 was produced as follows. Onto the outer periphery of copper-made conductor 1 having a 1.0 mm φ circular in cross-section, the polyamideimide varnish for forming the inner non-foamed insulating layer as prepared in Example 1 was applied, and the resultant material was baked at a furnace temperature of 510°C to form 3 μm-thick inner non-foamed insulating layer 25. Subsequently, the foaming polyamideimide varnish prepared in Example 1 was directly applied onto inner non-foamed insulating layer 25, and the resultant material was baked at a furnace temperature of 530°C to obtain a molding (undercoating wire) in which 19 μm-thick foamed insulating layer 2 was formed. Subsequently, HI-406 (trade name, manufactured by Hitachi Chemical Co., Ltd.) was coated on the undercoating wire so as to have a thickness of 33 μm while baking the wire at a furnace temperature of 530°C, and then the coated wire was heated again for 20 seconds in a tubular furnace (KTF030N1 (trade name), manufactured by Koyo Thermo Systems Co., Ltd.) heated to 600°C to form outer non-foamed insulating layer 3. Thus, the insulated wire in Example 7 was produced.

(Comparative Example 1)

The insulated wire of Comparative Example 1 was produced in the same manner as in Example 1, except that the film thickness of the foamed insulating layer was changed to 80 μm and the outer insulating layer was not formed.

(Comparative Example 2)

In the same manner as in Example 1, a molding (undercoating wire) in which inner non-foamed insulating layer 25 and a 5 μm-thick foamed insulating layer were formed was obtained. Subsequently, in the same manner as in Example 3, polyimide varnish (U-IMIDE).was used for the undercoating wire to form a 100 μm-thick outer non-foamed insulating layer. Thus, the insulated wire in Comparative Example 2 was produced.

(Comparative Example 3)

For forming an outer non-foamed insulating layer, polyphenylene sulfide (PPS, trade name: FZ-2100, manufactured by DIC Corporation), which is a thermoplastic resin, was used.
In the same manner as in Example 2, a molding (undercoating wire) in which inner non-foamed insulating layer 25 and an 80 $\mu$m-thick foamed insulating layer were formed was obtained. Subsequently, the above-mentioned PPS resin was coated onto the undercoating wire at a dice temperature of 320°C and a resin pressure of 30 MPa using an extruder to be 20 $\mu$m in thickness to form an outer non-foamed insulating layer. Thus, the insulated wire in Comparative Example 3 was produced.

(Comparative Example 4)

In the same manner as in Example 1, an inner non-foamed insulating layer and a 100 $\mu$m-thick foamed insulating layer were formed on a conductor, and further a liquid prepared by dissolving 20 g of PPSU (Radel R (trade name), manufactured by Solvay S. A.) into 100 g of NMP was applied onto the foamed insulating layer, and the resultant material was baked at 510°C. Thus, a molding (undercoating wire) in which the inner non-foamed insulating layer, the foamed insulating layer and an adhesion layer were formed was obtained. Subsequently, HI-406 (trade name, manufactured by Hitachi Chemical Co., Ltd.) was coated on the undercoating wire and baked at a furnace temperature of 510°C so as to have a thickness of 3 $\mu$m. Thus, the insulated wire in Comparative Example 4 was produced.

(Comparative Example 5)

The insulated wire in Comparative Example 5 was produced in the same manner as in Example 4, except that the thickness of the foamed insulating layer was changed to 5 $\mu$m.

(Comparative Example 6)

The insulated wire in Comparative Example 6 was produced in the same manner as in Example 4, except that the thickness of the inner non-foamed insulating layer was changed to 5 $\mu$m, no adhesion layer was arranged, the thickness of the foamed insulating layer was changed to 30 $\mu$m, and the porosity of the foamed insulating layer was adjusted to 82%.
Physical properties and evaluation test results of the insulated wires obtained in Examples 1 to 7 and Comparative Examples 1 to 6 are showed in Table 1. Evaluation methods thereof are as described below.

[Porosity, thickness, thickness ratio, average cell size, glass transition temperature and ratio of closed cells]

A thickness of each layer, a porosity of foamed insulating layer 2, a glass transition temperature (expressed as Tg in Table 1) of the thermosetting resin for forming foamed insulating layer 2, a ratio of closed cells of foamed insulating layer 2 and a glass transition temperature of the resin for forming outer non-foamed insulating layer 3 (expressed as Tg in Table 1) in Examples and Comparative Examples were measured as described above.
Further, regarding the average cell size of foamed insulating layer 2, twenty cells were selected at random in a scanning electron microscopical (SEM) image in the cross-section of the thickness direction of foamed insulating layer 2, and the average cell size was calculated in a diameter measurement mode using an image size measurement software (WinROOF, manufactured by MITANI Corporation), and the obtained value was defined as the cell size.
Further, a thickness ratio of foamed insulating layer 2 to outer insulating layer 3 was calculated.

[Measurement of thickness deformation ratio]

A thickness deformation ratio in Examples and Comparative Examples was observed using a microscope (VHX-1000, manufactured by Keyence Corporation). As a state before pressure application, the insulated wire was embedded into an epoxy resin, and the resultant specimen was polished perpendicularly to a direction of the wire so as to allow observation of a cross-section of the insulated wire. When pressure was applied to the insulated wire, the insulated wire was compressed with two stainless steel plates (also referred to as SUS plates) at 1 MPa using a universal material testing machine (manufactured by Shimadzu Corporation, trade name: Autograph AGS-H), the epoxy resin was poured between the SUS plates while a compressed state was maintained, and cured to obtain a sample formed of the SUS plates, the insulated wire and a cured product of the epoxy resin. In the same manner as before the pressure was applied, a cross-section was observed using a microscope to calculate thickness deformation ratios before and after compression according to the above-mentioned formula.

[Partial discharge inception voltage]

The sample in the compressed state as prepared in measurement of the thickness deformation ratio was used to wire a grounding electrode to one of the SUS pates, and a high voltage electrode to conductor 1. Partial Discharge Tester (KPD2050, manufactured by Kikusui Electronics Corporation) was used to apply an alternating voltage having 50 Hz sine waves. Voltage (effective value) when a discharge electric charge amount was 10 pC was measured while the voltage was continuously increased. Measurement temperature was adjusted to 25°C at 50%RH. The partial discharge inception voltage depends on a thickness of an insulating film ("total thickness" in Table 1), but if an equivalent calculated according to the following formula when the thickness of the insulating film is taken as 50 $\mu$m is 600 V or more, partial discharge is presumably hard to generate. Accordingly, as the evaluation, a case where the equivalent was 650 V or more was expressed using "⊙", a case where the equivalent was 600 to 649 V was expressed using "○" and a case where the equivalent was less than 600 V was expressed using "△".

Conversion formula: Conversion in the case where the thickness was taken as 50 $\mu$m was made using the Dakin's experimental formula described below.

$$\{Formula\ 1\}$$

$$V = 163\ (t\diagup\varepsilon)^{\,0.46}$$

In the experimental formula described above, V represents a partial discharge inception voltage, t represents a thickness of the entire insulation layer, and $\varepsilon$ represents a relative dielectric constant of the entire insulation layer.

"Relative dielectric constant of the entire insulation layer" refers to a value calculated, from electrostatic capacitance of the insulated wire and outer diameters of the conductor and the insulated wire, according to the following formula.

$$Formula:\ \varepsilon r^{*} = Cp\cdot Log(b/a)\ /\ (2\pi\varepsilon_0)$$

Herein, $\varepsilon r^{*}$ represents a dielectric constant of the entire insulation layer, Cp represents a capacitance per unit length [pF/m], a represents an outside diameter of the conductor, b represents an outside diameter of the insulated wire, and $\varepsilon_0$ represents a vacuum permittivity ($8.855\times10^{-12}$[F/m]), respectively.

By using both an LCR HITESTER (Model 3532-50 (trade name: LCR HITESTER) manufactured by HIOKI E.E. CORPORATION) and an insulated wire left for 24 hours in a dry air at ordinary temperature (25°C), and setting a measuring temperature to 25°C and 250°C, and putting the insulated wire into a thermostat bath having been set to a predetermined temperature, and then measurement of capacitance was carried out at the time when the temperature has become constant.

Also note that in a case where the cross-section of the insulation layer is not circular but rectangular as an example, "the dielectric constant of the entire insulation layer" can be calculated using a relation that capacitance Cp of the entire insulation layer is a sum of capacitance Cf of a flat part and capacitance Ce of a corner part (Cp=Cf+Ce). Specifically, provided that lengths of a long side and a short side of the straight-line portion of the conductor are represented by L1 and L2, respectively, a radius of curvature of the conductor corner is represented by R, and a thickness of the entire insulation layer is represented by T, the capacitance Cf of the flat part and the capacitance Ce of the corner part are expressed by the following formulae. Using these formulae, $\varepsilon r^{*}$ was calculated from the observed capacitance of the entire insulated wire and capacitance Cp (Cf+Ce) of the insulation layer.

$$Cf = (\varepsilon r^{*}/\varepsilon_0)\times2\times(L1+L2)/T$$

$$Ce = (\varepsilon r^{*}/\varepsilon_0)\times2\pi\varepsilon_0/Log\{(R+T)/R\}$$

[Pencil hardness]

The outer non-foamed insulating layer of each insulated wire produced was cut in an axial direction, and only the outer non-foamed insulating layer was peeled. Hardness measurement (enameled wire) according to the pencil hardness method specified in JIS-K 5600-5-4 was carried out using the peeled outer non-foamed insulating layer as a test specimen. Electric System Pencil Scratch Hardness Tester (No. 553-M1 (trade name), manufactured by YASUDA SEIKI SEISAKUSHO, LTD.) was used as a pencil hardness tester. In addition, the pencil hardness is an index of scratch resistance of the insulated wire, and if the pencil hardness is 4H or more, the test specimen is confirmed to have excellent scratch resistance.

[Flexibility]

The flexibility of each insulated wire produced was evaluated as described below. More specifically, when a cross-sectional form of a conducting wire was circular, the wire was wound around a cylindrical body having an outer diameter isomeric with the diameter of the insulated wire (self-diameter winding), and on the other hand, when a cross-sectional form of the conducting wire was rectangular, the wire was wound around a cylindrical body having an outer diameter isomeric with a length of a short side of the insulated wire. Appearance of the wound insulated wire was observed using a microscope (VHX-2000, manufactured by Keyence Corporation). As the evaluation, a case where no change in the appearance was observed at all was expressed using "⊙", a case where, while a color of the insulating film changed and wrinkles were generated in a bent outside part, no influence was produced on practical characteristics was expressed using "○", a case where, while a color changed and wrinkles were confirmed wholly around the film, no influence was produced on practical use was expressed using "Δ", and a case where cracks were caused on the insulating film or the conductor was exposed was expressed using "×".

[Overall evaluation]

An overall evaluation was conducted on the partial discharge inception voltage and the flexibility required as the insulated wire, and also important items on the improvement in efficiency of the motor, such as the improvement in the conductor space factor and the scratch resistance, which are problems to be solved according to the present invention. One that reached a desirable level at which the wire could be sufficiently used as the motor was expressed using "○", a case where an evaluation of "Δ" was made in any one of evaluation items, and although no problem of the present invention could be solved, no influence was produced on practical use was expressed using "Δ", and one that had a defect or a problem (evaluated as "x") in any one of the above-mentioned items was expressed using "x".

{Table 1}

Table 1

| | | Ex 1 | Ex 2 | Ex 3 | Ex 4 | Ex 5 | Ex 6 | Ex 7 |
|---|---|---|---|---|---|---|---|---|
| Conductor | Cross-sectional shape | circular | circular | Rectangular | Rectangular | Rectangular | circular | Rectangular |
| Inner non-foamed insulating layer | Resin Thickness (μm) | PAI 4 | - - | PI 4 | PEsI 3 | PAI 3 | - - | PAI 3 |
| Foamed insulating layer | Thermosetting resin Tg (°C) | Foamed PAI 280 | Foamed PAI 280 | Foamed PI 350 | Foamed PEsI 180 | Foamed polyester 140 | Foamed PAI 275 | Foamed PAI 280 |
| | Thickness (μm) Porosity (%) | 19 30 | 20 30 | 60 40 | 30 42 | 33 32 | 20 30 | 19 30 |
| | Average cell size (μm) | 2.5 | 2.5 | 5 | 7 | 2.8 | 1.7 | 0.8 |
| | Ratio of the closed cells (%) | 95% | 95% | 90% | 85% | 94% | 99% | 99% |
| Adhesion layer | Resin | - | - | - | PPSU | PEI | - | - |
| Outer non-foamed insulating layer | Resin Tg (°C) | PAI 280 | PAI 270 | PI 360 | PAI 270 | PI 360 | PAI+PC 150 | PAI 280 |
| | Pencil hardness Thickness (μm) | 5H 33 | 4H 80 | 6H 30 | 4H 90 | 6H 30 | 4H 30 | 5H 20 |
| Total thickness | (μm) | 56 | 100 | 94 | 123 | 66 | 50 | 42 |
| Thickness ratio (Conversion) | | 19/33 36.5/63.5 | 20/80 20/80 | 60/30 66.7/33.3 | 30/90 25/75 | 33/30 52/48 | 20/30 40/60 | 19/20 48.7/51.3 |
| Flexibility | | ⊙ | ⊙ | ⊙ | ⊙ | o | o | ⊙ |
| Partial discharge inception voltage (V) | | ⊙ | o | ⊙ | o | ⊙ | ⊙ | ⊙ |
| Thickness deformation ratio of foamed insulating layer (%) | | 20 | 21 | 30 | 40 | 32 | 16 | 20 |
| Overall evaluation | | o | o | o | o | o | o | o |

"Ex" stands for Example according to the present invention.

Table 1 (continued)

| | | C Ex 1 | C Ex 2 | C Ex 3 | C Ex 4 | C Ex 5 | C Ex 6 |
|---|---|---|---|---|---|---|---|
| Conductor | Cross-sectional shape | circular | circular | circular | circular | Rectangular | Rectangular |
| Inner non-foamed insulating layer | Resin | PAI | PAI | - | PAI | PEsI | PEsI |
| | Thickness (µm) | 4 | 4 | - | 4 | 3 | 5 |
| Foamed insulating layer | Thermosetting resin Tg (°C) | Foamed PAI 272 | Foamed PAI 265 | Foamed PAI 272 | Foamed PAI 270 | Foamed PEsI 180 | PEsI 180 |
| | Thickness (µm) Porosity (%) | 80 30 | 5 5 | 80 30 | 100 30 | 5 42 | 30 82 |
| | Average cell size (µm) | 2.5 | 2.0 | 2.5 | 2.5 | 7 | 7 |
| | Ratio of the closed cells (%) | 90% | 50% | 95% | 94% | 85% | 60% |
| Adhesion layer | Resin | - | - | - | PPSU | PPSU | - |
| Outer non-foamed insulating layer | Resin Tg (°C) | - - | PI 360 | PPS 98 | PAI 260 | PAI 270 | PAI 270 |
| | Pencil hardness Thickness (µm) | - - | 5H 100 | H 20 | 2H 3 | 5H 90 | 4H 90 |
| Total thickness | (µm) | 84 | 109 | 100 | 107 | 98 | 125 |
| Thickness ratio (Conversion) | | 80/- - | 5/100 4.7/95.3 | 80/20 80/20 | 100/3 97.1/2.9 | 5/90 5.3/94.7 | 30:90 25:75 |
| Flexibility | | × | ◉ | ○ | △ | ◉ | × |
| Partial discharge inception voltage (V) | | ◉ | △ | ◉ | ◉ | △ | ◉ |
| Thickness deformation ratio of foamed insulating layer (%) | | 20 | 12 | 5 | 10 | 40 | 55 |
| Overall evaluation | | × | × | △ | △ | △ | △ |

"C Ex" stands for Comparative Example.

As may be seen from Table 1, all of the insulated wires in Examples 1 to 7 in which the insulated wires had the conductor being circular or rectangular in the cross-section, foamed insulating layer 2 having the thickness deformation ratio of 15% or more and 50% or less and outer non-foamed insulating layer 3 having the pencil hardness of 4H or more, and the thickness ratio of foamed insulating layer 2 to outer non-foamed insulating layer 3 was in the range of 20 : 80 to 80 : 20 had the high partial discharge inception voltage and also a large thickness reduction rate of foamed insulating layer 2 due to collapse under a specified pressure environment to allow a comparative increase in the cross-section area ratio of the conductor in the cross-section area of the insulated wire when the wire was subjected to motor forming, and excellent scratch resistance. Accordingly, the insulated wire of the present invention is found to allow contribution to miniaturization and improvement in efficiency of the motor coil.

On the other hand, the insulated wire in Comparative Example 1 in which the wire had no outer non-foamed insulating layer 3 had the high partial discharge inception voltage, but could not satisfy requirements needed as the insulated wire including the flexibility and the scratch resistance because of absence of an outer film.

Moreover, in Comparative Example 2 and Comparative Example 5 in which the thickness of foamed insulating layer 2 was small, and the thickness ratio of foamed insulating layer 2 to outer non-foamed insulating layer 3 was not within the range of 20 : 80 to 80 : 20, no decrease in the conductor space factor was attained, and further no reducing dielectric constant of the insulating layer was attained, and the partial discharge inception voltage was small. Moreover, in Comparative Example 4 in which the thickness of foamed insulating layer 2 was large, and the thickness ratio of foamed insulating layer 2 to outer non-foamed insulating layer 3 was not within the range of 20 : 80 to 80 : 20, the hardness of the outer non-foamed insulating layer was small, decrease in the conductor space factor was not attained, and also the requirements of the scratch resistance was not satisfied. Further, in Comparative Example 3 in which the outer non-foamed insulating layer was formed of the thermoplastic resin only, the hardness of the outer non-foamed insulating layer was small, decrease in the conductor space factor was not attained, and also the requirement of the scratch resistance was not satisfied. Moreover, in Comparative Example 6 in which the thickness deformation ratio was 55%, the flexibility was poor.

As described above, none of the insulated wires in Comparative Examples 1 to 6 were found to attain realization of improvement in the partial discharge inception voltage and the scratch resistance, or miniaturization or improvement in efficiency of the motor coil.

(Example 8)

A motor was produced using the insulated wire in Example 1. More specifically, the motor was produced by winding a coil into a stator slot using a coil winding machine to insert the coil into the slot. In addition, an end portion of the insulated wire was outside the slot, and was not collapsed. The thus produced motor was confirmed to be suppressed in the partial discharge in the end portion of the insulated wire, and to be small and highly efficient.

The insulated wires in Examples 1 and 7 have the cross-section shown in Fig. 2 in which the wires have inner non-foamed insulating layer 25, foamed insulating layer 2 and outer non-foamed insulating layer 3. The insulated wires in Examples 2 and 6 have the cross-section shown in Fig. 1 in which the wires have foamed insulating layer 2 and outer non-foamed insulating layer 3. The insulated wire in Example 3 has the cross-section shown in Fig. 5 in which the wire has inner non-foamed insulating layer 25, foamed insulating layer 2 and outer non-foamed insulating layer 3. The insulated wires in Examples 4 and 5 have the cross-section shown in Fig. 6 in which the wires have inner non-foamed insulating layer 25, foamed insulating layer 2, adhesion layer 35 and outer non-foamed insulating layer 3. The insulated wire of the present invention is not limited thereto, and can adopt various kinds of structure having the foamed insulating layer and the outer non-foamed insulating layer. For example, in the insulated wires shown in Fig. 1 to Fig. 6, respectively, the wires may have at least one inner non-foamed insulating layer for dividing the foamed insulating layer into a plurality of layers in the thickness direction. This inner non-foamed insulating layer is basically the same as inner non-foamed insulating layer 25 other than a restricted position.

The present invention is not construed to be limited by the above-mentioned embodiments, and various modifications can be made within the scope of the technical matter of the present invention.

INDUSTRIAL APPLICABILITY

The present invention can be applied to an automobile, various kinds of electric/electronic equipment and the like, and fields requiring resistance to voltage and heat resistance. The insulated wire of the present invention can be used in a motor, a transformer and the like, and can provide high performance electric/electronic equipment. Particularly, the insulated wire of the present invention is favorable as a coil for the driving motors of HV (hybrid vehicles) or EV (electric vehicles).

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2013-022741 filed in Japan on February 7, 2013, which is entirely herein incorporated by reference.

REFERENCE SIGNS LIST

1 Conductor
2 (Foamed) insulating layer
3 Outer non-foamed insulating layer
25 Inner non-foamed insulating layer
35 Adhesion layer

**Claims**

1. An insulated wire, comprising:

   a conductor;
   an insulating layer that directly or indirectly coats the outer periphery of the conductor and includes a foaming thermosetting resin; and
   an outer non-foamed insulating layer that directly or indirectly coats the outer periphery of the insulating layer,
   wherein the insulating layer has a thickness deformation ratio of 15% or more and 50% or less upon applying a pressure of 1 MPa at 25°C,
   wherein the outer non-foamed insulating layer has pencil hardness of 4H or more, and
   wherein a ratio of a thickness of the insulating layer to a thickness of the outer non-foamed insulating layer is 20 : 80 to 80 : 20.

2. The insulated wire according to Claim 1, wherein the thermosetting resin has a glass transition temperature of 150°C or higher.

3. The insulated wire according to Claim 1 or 2, wherein the insulating layer includes closed cells.

**EP 2 955 725 A1**

**4.** The insulated wire according to any one of Claims 1 to 3, wherein the insulating layer has a porosity of 10% or more.

**5.** The insulated wire according to any one of Claims 1 to 4, used as a winding wire for a motor coil.

**6.** A motor, comprising winding the insulated wire according to any one of Claims 1 to 5 into a stator slot in a state in which pressure is applied in a direction for reducing the outer diameter of the insulated wire and a thickness of the insulating layer is reduced.

**20**

*Fig. 1*

*Fig. 2*

*Fig. 3*

Fig. 4

Fig. 5

Fig. 6

## INTERNATIONAL SEARCH REPORT

| International application No. |
| --- |
| PCT/JP2014/052573 |

### A. CLASSIFICATION OF SUBJECT MATTER
*H01B7/02*(2006.01)i, *H01F5/06*(2006.01)i, *H02K3/32*(2006.01)i

According to International Patent Classification (IPC) or to both national classification and IPC

### B. FIELDS SEARCHED
Minimum documentation searched (classification system followed by classification symbols)
H01B7/02, H01F5/06, H02K3/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2011-238384 A (The Furukawa Electric Co., Ltd.), 24 November 2011 (24.11.2011), claims; paragraph [0019]; fig. 2 & US 2012/0279752 A1 & EP 2568476 A1 & WO 2011/138934 A1 & TW 201212049 A & CN 102844822 A & KR 10-2012-0127585 A | 1-6 |
| A | WO 2011/118717 A1 (The Furukawa Electric Co., Ltd.), 29 September 2011 (29.09.2011), claims; fig. 2 & US 2013/0014971 A1 & EP 2551858 A1 & CN 102812524 A & KR 10-2013-0006617 A & TW 201140620 A | 1-6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 27 February, 2014 (27.02.14) | Date of mailing of the international search report 11 March, 2014 (11.03.14) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2014/052573 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-31980 A (Sumitomo Electric Wintec, Inc.), 02 February 2006 (02.02.2006), claims; fig. 1 (Family: none) | 1-6 |
| A | JP 2012-113836 A (Toyota Motor Corp.), 14 June 2012 (14.06.2012), claims; fig. 1 (Family: none) | 1-6 |
| A | JP 7-282639 A (Hitachi Cable, Ltd.), 27 October 1995 (27.10.1995), claims (Family: none) | 1-6 |
| A | JP 2008-305620 A (Hitachi Cable, Ltd.), 18 December 2008 (18.12.2008), claims (Family: none) | 1-6 |
| P,A | WO 2013/133333 A1 (The Furukawa Electric Co., Ltd.), 12 September 2013 (12.09.2013), claims; fig. 1 (Family: none) | 1-6 |
| P,A | WO 2013/133334 A1 (The Furukawa Electric Co., Ltd.), 12 September 2013 (12.09.2013), claims; fig. 1 to 2 (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3496636 B
- JP 4584014 B
- JP 3299552 B
- JP 3276665 B
- JP 2013022741 A